# EUROPEAN PATENT APPLICATION

(11) **EP 1 724 489 A2**
(43) Date of publication of application: **22.11.2006**
(21) Application number: 06009918.1
(22) Date of filing: 14.05.2006
(51) Int. Cl.: F16F 9/02

(54) **Gas spring assembly with bumper**

(30) Priority: 17.05.2005 US 131128
(71) Applicant: STABILUS, INC., Gastonia NC 28052-1898 (US)
(72) Inventor: Lange, Danniel, Charlotte NC 28269 (US); Sabet, David, Ferndale MI 48220 (US); Daniels, Aaron, Taylor MI 48180 (US); Jolley, Alan, Gastonia NC 28054 (US)
(74) Representative: Klein, Thomas

(57) **Abstract**

A counterbalance gas spring assembly comprising a piston assembly 2, bumper 3, and washer 4. The bumper 3 is retained between the washer 4 and the piston assembly 2. The washer 4 is in contact with the rod 6 to distribute the load to the bumper 3 when the gas spring is opened.

## Description

### TECHNICAL FIELD OF THE INVENTION

The present invention relates generally to gas springs assemblies and, particularly, to gas springs of the type that are used primarily to lift and hold open the trunk lids, tailgates, hatchback lids, and engine compartment hoods of motor vehicles. More specifically, the invention relates to a gas spring assembly with a bumper.

### BACKGROUND OF THE INVENTION

Gas springs are widely used to partly or totally counterbalance the engine compartment hoods, trunk lids, rear windows, liftgates and tailgates of passenger cars, station wagons, and vans to facilitate opening them and to hold them open at a nearly or fully open position.

During the construction and finishing of automobiles, it is often necessary for the manufacturer to manually push up on the liftgates of the vehicle. This might be necessary in order to finish installation of the trim or to add other components to the vehicle. A user of the vehicle may also need to push up on the liftgate for maintenance of the vehicle.

A problem arises whereby the manual push on the liftgate creates a significant tensile load on the gas springs that are counterbalancing with the liftgate. In fact, the tensile load can exceed the maximum allowable load on the gas spring or the sockets that are used in assembling the gas springs.

There is a need to decrease the amount of tensile load on the gas spring.

### SUMMARY OF THE INVENTION

An object of the present invention is to provide a gas spring assembly with improved functional characteristics. Another object is to provide a gas spring assembly that will prevent damage to internal and/or external components of the gas spring assembly.

The objects referred to above are attained, in accordance with the present invention, by a gas spring with a piston assembly and an internal bumper. The bumper can be retained between a washer and the piston assembly. The washer is in contact with a rod guide portion of the gas spring assembly. The contact allows an applied load to be distributed to the bumper.

The bumper installation helps to eliminate damage to internal and/or external components of the gas spring assembly by reducing the load on the components. The decreased load is accomplished because the bumper allows for an increase in the time and displacement of the piston assembly.

### DESCRIPTION OF THE DRAWINGS

For a more complete understanding of the present invention, and the advantages thereof, reference may be made to the following description of exemplary embodiments, taken in conjunction with the accompanying drawings, in which:
FIG. 1 is a side view of one embodiment of the present invention in an unloaded position.
FIG. 2 is a side view of one embodiment of the present invention in an intermediate position.
FIG. 3 is a side view of one embodiment of the present invention in a loaded position.
FIG. 4 is a side cross-sectional view of one embodiment of the present invention in a loaded position.
FIG. 5 is a side cross-sectional view of one embodiment of the present invention in an unloaded position.

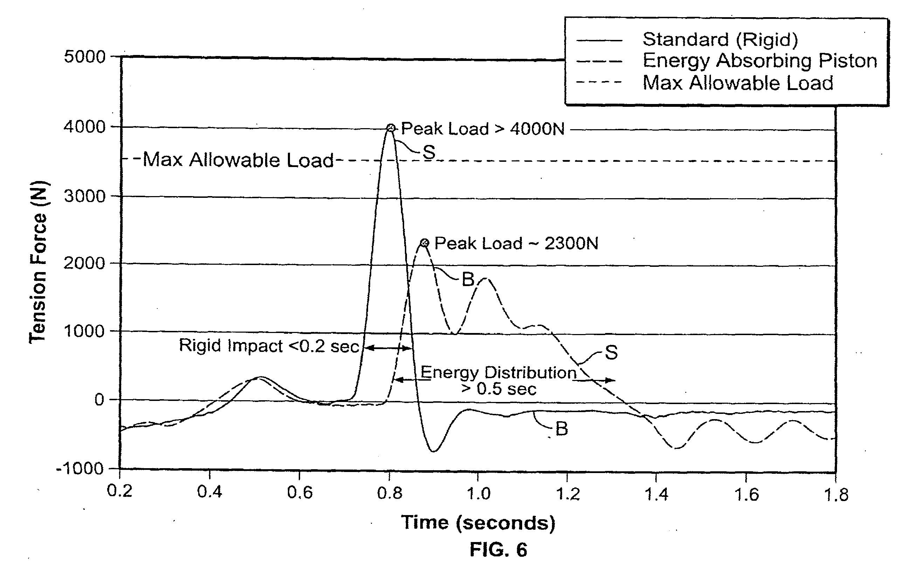

FIG. 6 is a graphical illustration of tension forces.

### DESCRIPTION OF THE EMBODIMENTS

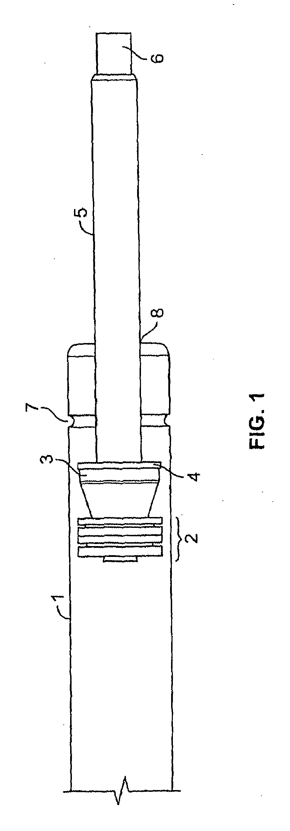

Fig. 1 shows an exemplary embodiment of a gas spring assembly of the present invention in an unloaded position. A tube 1 houses a piston assembly 2, a bumper 3, and a washer 4. The piston assembly 2 acts to control the extension and compression speed of a rod 6 with respect to the tube 1. The piston assembly 2 may include components known in the art. In one embodiment, the piston assembly 2 includes a plastic piston with by-pass grooves that can vary to control speed, a sealing ring element (either plastic or rubber) to seal the piston to the inside of the tube wall, and two metallic washers on either side of the piston that act to strengthen the assembly and also interact with the sealing element to control speed.

A rod 6 is attached to the piston assembly 2. The rod 6 has a thick portion 5. The rod 6 and extends through an opening 8 in the tube 1. The washer 4 holds the bumper 3 so that the bumper 3 is in contact with the piston assembly 2. The washer 4 is attached to the bumper 3 by any suitable means, preferably an adhesive. Alternatively, the washer 4 or other similar piece is integrated into the bumper 3. The opening of the washer 4 is large enough to fit around the rod 6 but can be of various thicknesses and made of any suitable material, preferably a metallic material. The bumper 3 is hollow and fits around the rod 6. In one embodiment, the tube 1 has an indent 7. The bumper 3 may be made of rubber, elastomeric material or other suitable materials.

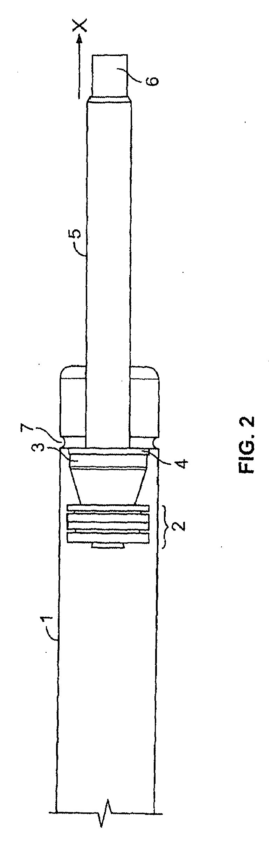

As shown in Fig. 2, a tensile force can be applied to the rod in a direction X away from the piston assembly. Such a force may be applied during the manufacturing process of the vehicle by a worker or it may be applied by a user of the vehicle. This force causes the rod 6 and piston assembly 2 to slide in a direction X. Fig. 2 shows the gas spring assembly in an intermediate position. In this position, the washer 4 is stopped from sliding any further by the indent 7 of the tube 1, but there is not yet any compression on the bumper 3.

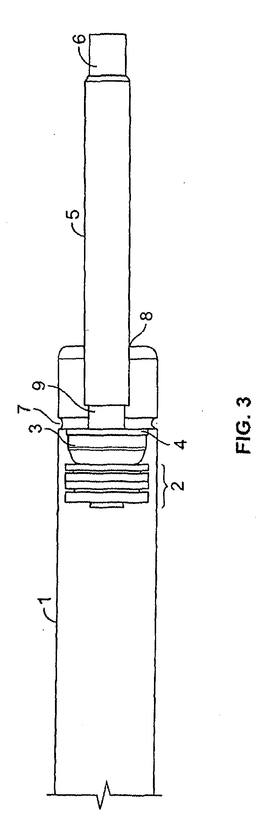

As shown in Fig. 3, if a tensile force continues to be applied in the direction X, the washer 4 will not move any further than the indent 7 and the bumper 3 will become compressed. The bumper 3 will absorb the extra tensile force. This allows the components of the gas spring assembly to remain undamaged.

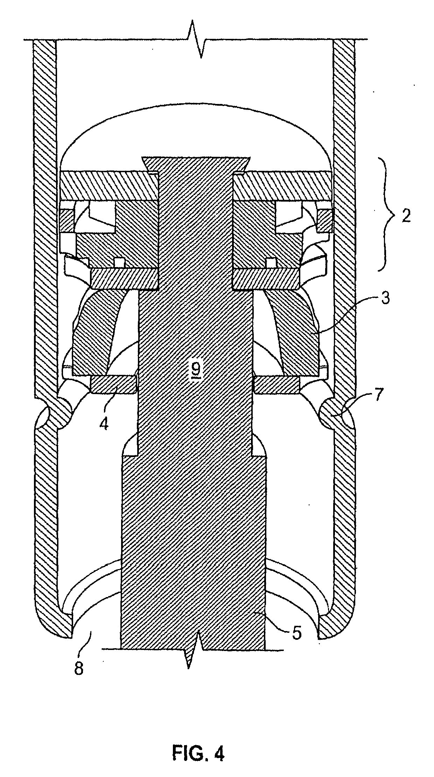

As shown in Figs. 3 and 4, the bumper 3 can be compressed in between the washer 4 and the piston assembly 2. Figs. 3 and 4 also show the washer 4 in contact with the indent 7. The bumper 3 may be located on a thin portion 9 of the rod 6. The thin portion 9 acts to align and guide the washer 4 on the rod 6 during the application of tensile loading. Additionally, the difference in diameter of the thin portion 9 and the rod 6 acts to contain the washer 4 and the bumper 3 against the piston assembly 2 to prevent them from moving around in the tube when the gas spring is in a fully compressed or closed position. In another embodiment, the rod 6 is constructed without the thin portion 9.

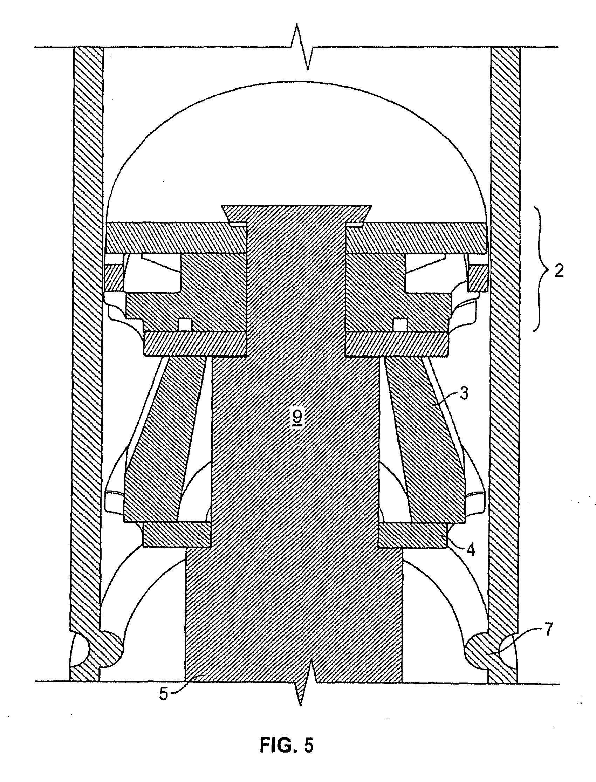

Testing was performed to measure the loads on a standard gas spring assembly as compared to the loads on the present invention. As shown in Fig. 5, a maximum allowable tensile load on the gas spring assembly may be approximately 3500 Newtons (N). This amount can vary depending on the size and/or configuration of the gas spring assembly. Various gas spring assemblies will have different maximum allowable tensile loads. In a gas spring without a bumper, the peak load can be approximately 4000N and the impact may be distributed over approximately 0.2 seconds, as shown by line S. With the use of the gas spring assembly with the bumper 3, the peak load is approximately 2300N and the impact is distributed over approximately 0.5 seconds, as shown by line B. The peak load of 2300N is well below the maximum allowable load of 3500N and represents a reduction of over 40%. The addition of the bumper 3 distributes the impact over a greater amount of time. The bumper 3 absorbs the energy and decreases the peak load on the gas spring assembly. The gas spring assembly is therefore less likely to be damaged or to collapse if the bumper 3 is used.

The foregoing merely illustrates the principles of the invention. Various modifications and alterations to the described embodiments will be apparent to those skilled in the art in view of the teachings herein. It will thus be appreciated that those skilled in the art will be able to devise numerous techniques which, although not explicitly described herein, embody the principles of the invention and are thus within the spirit and scope of the invention.

## Claims

1. A gas spring assembly comprising:
a tube (1) having a substantially uniform internal diameter except for one portion having a smaller diameter;
a piston assembly (2) within said tube (1) attached to a rod (6), said rod (6) extending through a washer (4) and an opening (8) in one end of said tube (1), said opening (8) being near the portion having a smaller diameter; and an elastomeric bumper (3), said elastomeric bumper (3) being held in between said piston assembly (2) and said washer (4); wherein said elastomeric bumper (3) becomes compressed when a force pulls said rod (6) in a direction away from said tube (1) and said washer (4) engages with said portion being a smaller diameter.

2. The gas spring assembly of claim 1 wherein said force creates a load on said gas spring assembly and said bumper (3) reduces said load by at least about 40%.

3. The gas spring assembly of claim 1 wherein said bumper (3) is made of rubber.

4. The gas spring assembly of claim 1 wherein said washer (4) is attached to said bumper (3).

5. The gas spring assembly of claim 1 wherein said smaller diameter is provided by an indent (7).

6. A gas spring assembly comprising:
a tube (1) having a substantially uniform internal diameter except for one portion having a smaller diameter;
a piston assembly (2) attached to a rod (6) having a thick portion (5) and a thin portion (9) within said tube (1), said rod (6) extending through an opening (8) in one end of said tube (1); and
an elastomeric bumper (3) is engaged with said thin portion (9) of said rod (1), said elastomeric bumper (3) being held in between said piston assembly (2) and
a washer (4);
wherein said elastomeric bumper (3) becomes compressed when a force pulls said rod (6) in a direction away from said tube (1) and said washer (4) engages with said portion having a smaller diameter.

7. The gas spring assembly of claim 6 wherein said force creates a load on said gas spring assembly and said bumper (3) reduces said load by at least about 40%.

8. The gas spring assembly of claim 6 wherein said bumper (3) is made of rubber.

9. The gas spring assembly of claim 6 wherein said washer (4) is attached to said bumper (3).

10. The gas spring assembly of claim 6 wherein said smaller diameter is provided by an indent (7).
